# FASCICULE DE BREVET EUROPEEN

(11) **EP 2 019 024 B1**
(45) Date de publication et mention de la délivrance du brevet: **15.09.2010**
(21) Numéro de dépôt: 08160758.2
(22) Date de dépôt: 18.07.2008
(51) Int. Cl.: B62D 25/06, B62D 29/04, B62D 27/02

(54) **Ensemble d'un brancard et d'une traverse de rehausse de toit**
Anordnung aus Längs- und Querträger zum Erhöhen eines Dachs
Assembly of a side sill and a roof extension cross piece

(30) Priorité: 24.07.2007 FR 0756698
(43) Date de publication de la demande: 28.01.2009
(73) Titulaire: Inoplast, 07100 Annonay (FR)
(72) Inventeur: Savin, René, 42390 Villars (FR); Al Galib, Dhafar, 69100 Villeurbanne (FR); Ben Salah, Karim, 07340 St Desirat (FR)
(74) Mandataire: Potdevin, Emmanuel Eric

(56) Documents cités:
- DE-U1-202006 018 996
- US-A1- 2005 082 880

## Description

La présente invention concerne le domaine technique des rehausses de toit de véhicule automobile.

Une rehausse de toit est un toit surélevé qui coiffe la caisse d'un véhicule en offrant un surcroît de volume intérieur, au dessus du volume strictement délimité par la caisse.

Une rehausse de toit est notamment décrite dans le document US 2005/0082880, divulguant toutes les caractéristiques du préambule de la revendication 1.

En général, les véhicules munis d'une rehausse de toit existent en deux versions, à savoir une version standard avec un toit, également désigné pavillon lorsqu'il s'agit d'un véhicule de tourisme dont le toit ne recouvre que l'habitacle, et une version à toit surélevé, dans laquelle le toit de la version standard est remplacé par une rehausse de toit.

Dans les deux cas, le toit est fermé par une peau, souvent en tôle.

Dans l'état de la technique, la peau de la rehausse est soutenue par une structure consistant en des brancards et des traverses. Les brancards sont des renforts longitudinaux placés le long des deux bords latéraux du toit. Les traverses, constituées de plusieurs pièces, s'étendent transversalement d'un bord latéral à l'autre du toit. Brancards et traverses forment une structure en échelle soutenant la peau de la rehausse. Les brancards et les traverses sont liés chacun directement à la caisse en blanc et à la peau du véhicule mais ne sont pas directement fixés les uns aux autres. La traverse est notamment liée à la caisse par des fixations ponctuelles.

Dans la suite de la description, on entend par "brancard" une pièce de structure destinée à soutenir au moins une partie de la peau de toit et s'étendant essentiellement dans la direction longitudinale du véhicule et on entend par "traverse" une pièce de structure destinée à soutenir au moins une partie de la peau de toit et s'étendant essentiellement dans la direction transversale du véhicule.

Les rehausses connues sont satisfaisantes en ce qui concerne le gain de volume qu'elles procurent. Toutefois, leurs performances lors de certains tests mécaniques, notamment les tests d'écrasement, définis par la norme internationale ECE 29 et testant le comportement du véhicule lorsqu'une charge donnée est appliquée sur la peau du toit de celui-ci, sont moyennes.

La présente invention a pour objet d'améliorer les performances mécaniques d'une rehausse de toit, notamment ses performances en matière d'écrasement.

A cet effet, la présente invention a pour objet un ensemble d'un brancard et d'une traverse de rehausse de toit, ladite rehausse de toit étant destinée à prendre appui sur une caisse en blanc de véhicule automobile, l'ensemble étant caractérisé en ce que le brancard et la traverse sont conformés pour être liés entre eux par une liaison de type surfacique et pour que l'ensemble ainsi formé ne soit lié à la caisse en blanc que par l'intermédiaire du brancard.

Dans la présente description, on entend par "être liés" le fait d'être assujetti l'un à l'autre, par des moyens de liaison capables de résister à une tentative de séparation des deux éléments liés.

Grâce à l'invention, les efforts appliqués sur la peau du véhicule, lorsque le toit est écrasé, sont transmis au brancard. La liaison surfacique entre la traverse et le brancard assure une bonne distribution des efforts subis par la peau sur le brancard et une meilleure reprise des efforts par celui-ci. Les efforts appliqués sur la peau et transmis à la caisse par l'intermédiaire des brancards sont ainsi mieux répartis sur la caisse. En conséquence, les dommages subis par le véhicule après un tel écrasement sont minimes, voire inexistants.

En outre, la liaison surfacique entre le brancard et la traverse permet d'améliorer l'acoustique du véhicule. Une telle liaison permet en effet de rigidifier l'ensemble traverse-brancard et, par conséquent, la rehausse de toit. Cela influe sur le comportement vibratoire du véhicule en modifiant les fréquences de résonance de la rehausse de toit pour les éloigner des fréquences normales de vibration de la peau du véhicule.

Dans un mode de réalisation particulier, le brancard longitudinal comprend un plan incliné formant surface de liaison du brancard et de la traverse, destiné à coopérer avec une surface de liaison de forme complémentaire de la traverse.

Ainsi, l'ensemble selon l'invention garantit un assemblage facile des différents éléments de la rehausse de toit. L'assemblage nécessite en effet un nombre minimal de pièces. Le temps d'assemblage, et, par conséquent, les coûts de fabrication de la rehausse sont ainsi diminués. La forme du brancard permet également un assemblage de la traverse en plusieurs positions, permettant de rattraper facilement la dispersion des dimensions de la traverse.

Dans un mode de réalisation particulier, le brancard et la traverse sont destinés à être liés par collage.

La colle agit comme un joint d'amortissement entre la traverse et le brancard, ce qui permet de diminuer les vibrations de la peau transmises au brancard et, par conséquent, à la caisse, et d'améliorer encore le comportement vibratoire du véhicule.

Dans un mode de réalisation particulier, le brancard comprend, selon sa dimension longitudinale, une surface d'appui destinée à coopérer avec une surface complémentaire de la caisse en blanc. En particulier, le brancard comprend, sur sa surface d'appui, une piste de collage.

Optionnellement, le brancard est en outre destiné à être fixé à la caisse au voisinage de la liaison de la traverse et du brancard, de préférence par vissage, ce qui permet d'améliorer encore la reprise des efforts appliqués sur la peau de la rehausse par la caisse en blanc. Cela permet également de rattraper les défauts géométriques de la rehausse et de la caisse en blanc en conformant la rehausse sur la caisse en blanc.

Dans un mode de réalisation particulier, la traverse est destinée à former un corps creux avec une peau de la rehausse, pour optimiser la fonction de rigidification de la peau par cette traverse.

Elle forme un profilé en U avec un fond et deux flancs, destinés à être recouverts par la peau. Elle comprend une partie centrale de rigidification et deux parties latérales, destinées chacune à être reliées à un brancard. Chaque partie latérale est de préférence conformée en corne, et comporte un fond constituant la surface de liaison avec le brancard. La traverse est donc conformée en une seule pièce, ce qui permet de faciliter l'assemblage de la rehausse.

De façon avantageuse, la traverse est d'un seul tenant avec au moins une partie de la peau de la rehausse. Cela permet de réduire les coûts de fabrication car cela limite encore le nombre de pièces distinctes à assembler.

En particulier, un flanc de la traverse est d'un seul tenant avec une première partie de la peau, ce flanc étant destiné à être recouvert par une deuxième partie de la peau. Ainsi, la traverse assure une fonction de support de la deuxième partie de la peau et une fonction de rigidification de la première partie de la peau, avec laquelle il est d'un seul tenant.

En outre, le brancard de l'ensemble peut comprendre au moins une zone présentant une forme de dimensions inférieures à celles d'une autre forme du brancard dans une zone de liaison avec la traverse. En effet, cette zone n'étant pas destinée à accueillir une traverse, ses propriétés mécaniques peuvent être moindres et ses dimensions peuvent donc être diminuées sans que les propriétés d'ensemble de la rehausse de toit n'en soient affectées. Cela permet un gain en masse de la rehausse de toit. En particulier, le brancard peut comprendre, entre deux zones de liaisons avec la traverse, une zone présentant une forme ajourée.

De façon optionnelle, le brancard et/ou la traverse est réalisé au moins partiellement en matière plastique, par exemple en un matériau composite.

La présente invention concerne également une traverse de l'ensemble selon l'invention.

Elle concerne également un brancard de l'ensemble selon l'invention.

Elle concerne en outre une rehausse de toit comprenant un ensemble d'un brancard et d'une traverse selon l'invention.

L'invention sera mieux comprise à la lecture de la description qui va suivre, donnée uniquement à titre d'exemple et faite en se référant aux dessins dans lesquels :
- la figure 1 est une représentation éclatée des pièces d'une rehausse de toit selon un mode de réalisation de l'invention,
- la figure 2 est une vue de dessous de la rehausse de toit selon le mode de réalisation de la figure 1,
- la figure 3 est une vue d'un détail de l'ensemble montrant la liaison d'une traverse et d'un brancard de l'ensemble selon le mode de réalisation de la figure 1,
- la figure 4 est une vue en perspective d'une traverse selon le mode de réalisation de la figure 1
- la figure 5 est une vue en coupe transversale de la liaison brancard-traverse de la figure 3.

On a représenté sur les figures une rehausse de toit selon un mode de réalisation de l'invention.

Cette rehausse de toit 10 comprend une peau avant 12 et une peau arrière 14. Des emboutis s'étendant selon la direction longitudinale du véhicule sont conformés dans les peaux avant 12 et arrière 14. La configuration de ces emboutis est étudiée pour atténuer les vibrations de la peau lors du roulage du véhicule.

La rehausse comprend également, le long de ses bords longitudinaux, des brancards 16, 18, 20 longitudinaux, appliqués contre la peau avant 12 ou arrière 14, de chaque coté de ladite peau. Chaque brancard est constitué de plusieurs parties 16, 18, 20 aboutées, liées entre elles grâce à des formes d'accouplement complémentaires. La partie 16 est destinée à être placée à l'avant de la rehausse de toit, la partie 18 est destinée à être placée en partie intermédiaire et la partie 20 est destinée à être placée en partie arrière de la rehausse 10.

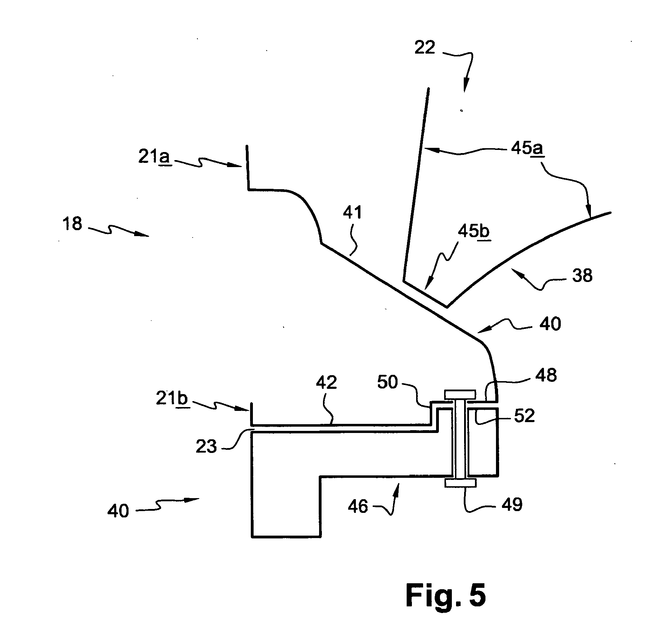

Comme on le voit mieux sur la figure 5, chaque brancard 16, 18, 20 comprend deux flancs 21a, 21b destinés à être appliqués contre une partie latérale de la peau 12, 14 de la rehausse et à être reliés à celle-ci par collage. Les brancards 16, 18, 20 sont également destinés à s'appuyer, par l'intermédiaire d'une surface d'appui inférieure 23, sur une partie supérieure de la caisse en blanc du véhicule.

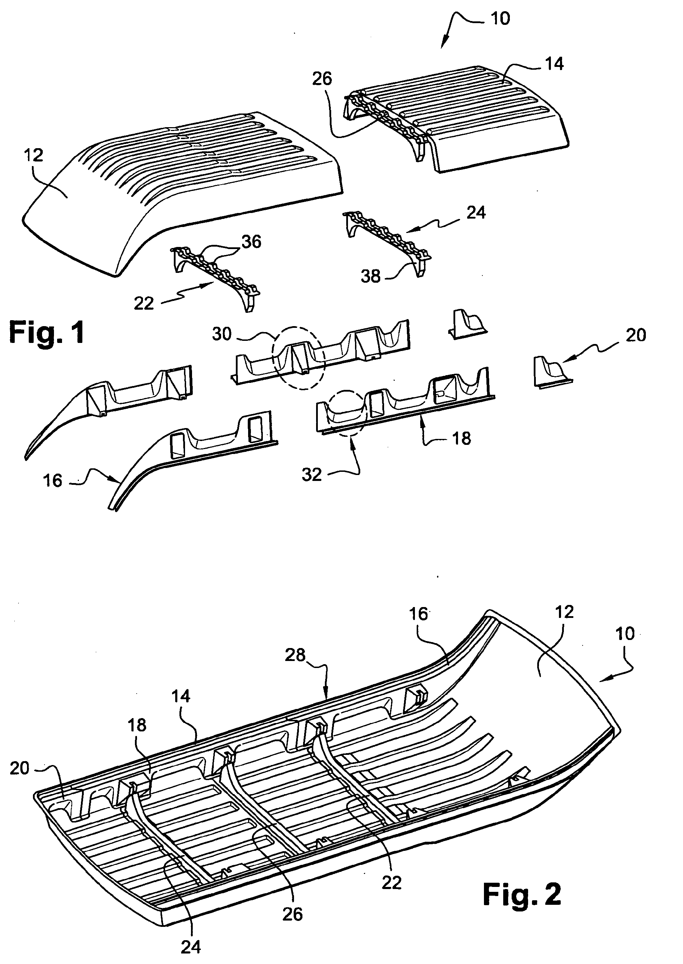

Comme on le voit mieux sur la figure 2, chaque brancard comprend, sur la surface d'appui 23, une piste de collage 28 le long de la direction longitudinale de la rehausse permettant de relier le brancard à la caisse.

Chaque brancard comprend en outre deux formes alternées selon la direction longitudinale de la rehausse : dans des zones 30, une première forme comprend une face de liaison avec une traverse 22, 24, 26 et dans des zones 32, disposées entre les zones 30, une seconde forme présente des dimensions moindres que celles de la première forme de la zone de liaison 30. Ces secondes formes constituent, en partie supérieure lorsque la rehausse est montée sur le véhicule, des ajours 34 entre les premières formes.

La rehausse comprend également des traverses 22, 24 et 26 destinées à être disposées dans la direction transversale de la rehausse de toit.

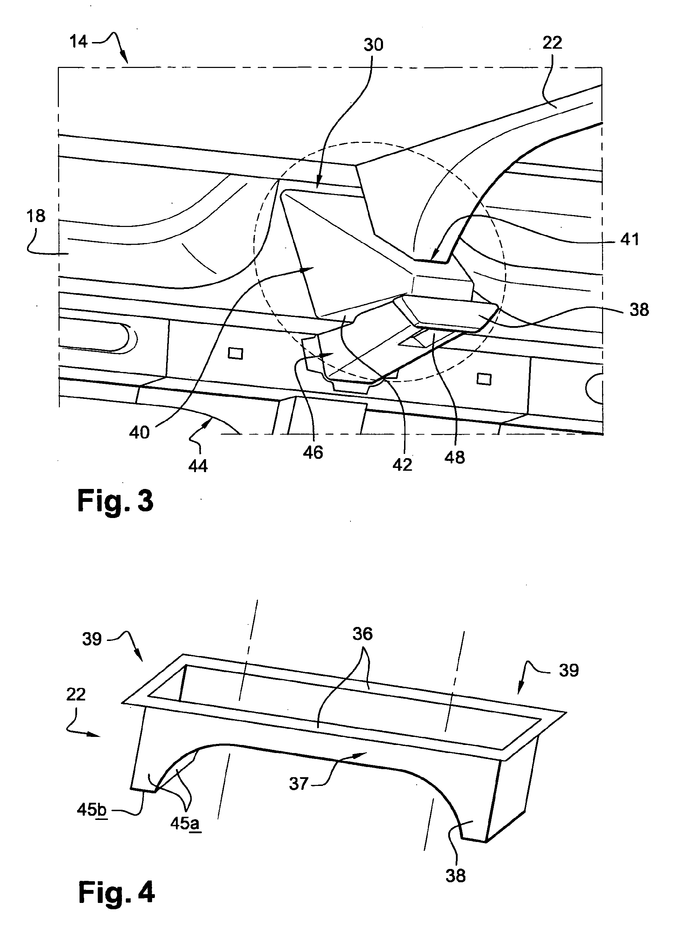

Comme on le voit plus particulièrement sur la figure 4, chaque traverse 22, 24, 26 est conformée pour former un corps creux avec la peau. Une traverse est ainsi conformée en un profilé en U et comprend deux flancs 36 destinés à être liés par collage avec la peau 12, 14 de la rehausse de toit.

En outre, la traverse comprend une partie centrale 37 de rigidification et, dans des parties latérales 39, la traverse est conformée en corne 38 orientée vers le sol lorsque la rehausse 10 est montée sur le véhicule. Les cornes 38 permettent la liaison avec les brancards 16, 18, 20, qui sera détaillée ci-après.

Comme représenté sur la figure 1, la traverse 26 est intégrée à la peau arrière 14. Son flanc arrière est notamment d'un seul tenant avec l'extrémité avant de la peau arrière 14. Cette traverse est destinée à être recouverte par la peau avant 12 et à y être reliée par collage. A cet effet, elle comprend une piste de collage située sur ses deux flancs 36.

On va maintenant détailler, en référence à la figure 3, la liaison brancard-traverse. Cette figure représente un détail d'une zone 30 de liaison du brancard avec la traverse.

Comme déjà indiqué, on voit que, dans la zone 30, les dimensions du brancard 16, 18, 20 sont plus importantes que dans les zones voisines 32. Le brancard 16, 18, 20 comprend une saillie transversale 40 destinée à être tournée vers l'intérieur du véhicule. Cette saillie comprend notamment une face supérieure 41, formant surface de liaison avec la traverse 22, 24, 26 et une face inférieure 42 destinée à s'appuyer et à être reliée à une caisse en blanc 44 du véhicule automobile. La face supérieure 41 forme un plan incliné relativement à la surface 42 et à un plan d'extrémité supérieure de la caisse, lorsque le brancard est monté sur la caisse. Elle forme en particulier un plan incliné comprenant la direction longitudinale du brancard, correspondant à la direction longitudinale du véhicule, ce plan étant incliné relativement aux directions transversale et verticale du véhicule lorsque le brancard est monté sur celui-ci.

La partie latérale 39 de la traverse est conformée en corne. Elle comprend quatre faces latérales 45a et un fond 45b formant une surface de liaison avec le brancard. Chaque corne 38 forme donc un puits dont le fond 45b est relié au brancard. Le fond 45b est de forme complémentaire de la face supérieure 41 du brancard, et forme donc également un plan incliné de même inclinaison que la face 41.

Les surfaces de liaison 41 et 45b du brancard et de la traverse sont destinées à être reliées par collage.

Comme on le voit sur les figures 3 et 5, la caisse 44 comporte, sur sa partie longitudinale supportant le brancard, un bras transversal 46 en saillie, tourné vers l'intérieur du véhicule et destiné à supporter la saillie 40. Ce bras 46 comprend un orifice 48, permettant d'introduire une vis 49 liant fermement la face inférieure 42 du brancard et le bras transversal 46.

Comme on le distingue également sur les figures 2 et 5, la saillie 40 du brancard comprend, en partie inférieure, une dépression 50 formant moyens de positionnement du brancard relativement à la caisse et destiné à coopérer avec une saillie 52 de forme complémentaire du bras 46.

Les différentes parties de la rehausse de toit sont dans cet exemple réalisées en matière plastique, notamment en un matériau composite.

On notera que l'invention n'est pas limitée à l'exemple décrit. La forme des brancards et des traverses n'est par exemple pas figée.

En variante, la rehausse peut être de longueur modulable, pour que les mêmes pièces puissent être adaptées sur des véhicules de différentes longueurs. Les peaux avant et arrière sont alors destinées à être associées, dans la configuration longue, avec au moins une rallonge de peau destinée à être placée entre les peaux avant et arrière. La rehausse dans sa version longue comprend également au moins une partie supplémentaire de brancard destinée à être accouplée aux parties de brancards déjà décrites et une traverse supplémentaire, destinée à être reliée à la partie supplémentaire de brancard.

## Revendications

1. Ensemble d'un brancard (16, 18, 20) et d'une traverse (22, 24, 26) de rehausse de toit (10), ladite rehausse de toit (10) étant apte à prendre appui sur une caisse en blanc (40) de véhicule automobile, l'ensemble étant **caractérisé en ce que** le brancard (16, 18, 20) et la traverse (22, 24, 26) sont conformés pour être liés entre eux par une liaison de type surfacique et pour que l'ensemble ainsi formé ne soit lié à la caisse en blanc (40) que par l'intermédiaire du brancard (16, 18, 20).

2. Ensemble selon la revendication précédente, dans lequel le brancard longitudinal (16, 18, 20) comprend un plan incliné (41) formant surface de liaison du brancard (16, 18, 20) et de la traverse (22, 24, 26), destiné à coopérer avec une surface de liaison (45b) de forme complémentaire de la traverse (22, 24, 26).

3. Ensemble selon l'une quelconque des revendications précédentes, dans lequel le brancard (16, 18, 20) et la traverse (22, 24, 26) sont aptes à être liés par collage.

4. Ensemble selon l'une quelconque des revendications précédentes, dans lequel la traverse (22, 24, 26) comprend une partie centrale (37) de rigidification et deux parties latérales (39), aptes chacune à être reliées à un brancard.

5. Ensemble selon les revendications 2 et 3, dans lequel chaque partie latérale de la traverse (22, 24, 26) est conformée en corne (38) et comporte un fond (45b) constituant la surface de liaison apte à coopérer avec le plan incliné (41) du brancard.

6. Ensemble selon l'une quelconque des revendications précédentes, dans lequel la traverse (26) est d'un seul tenant avec au moins une partie de la peau (12, 14) de la rehausse (10).

7. Ensemble selon la revendication précédente, dans lequel un flanc (36) de la traverse (26) est d'un seul tenant avec une première partie (14) de la peau, ce flanc étant apte à être recouvert par une deuxième partie (12) de la peau.

8. Ensemble selon l'une quelconque des revendications précédentes, dans lequel le brancard (16, 18, 20) de l'ensemble comprend au moins une zone (32) présentant une forme de dimensions inférieures à celles d'une autre forme du brancard dans une zone de liaison (30) avec la traverse (22, 24, 26).

9. Traverse (22, 24, 26) de l'ensemble selon l'une quelconque des revendications précédentes.

10. Brancard longitudinal (16, 18, 20) de l'ensemble selon l'une quelconque des revendications 1 à 8.

11. Rehausse de toit (10) comprenant l'ensemble selon l'une quelconque des revendications 1 à 8.

## Claims

1. An assembly of a cant rail (16, 18, 20) and a cross-member (22, 24, 26) of a raised roof (10), said raised roof (10) being suitable for bearing against a body-in-white (40) of a motor vehicle, the assembly being **characterized in that** the cant rail (16, 18, 20) and the cross-member (22, 24, 26) are shaped so as to be connected together via a surface-type connection and so that the assembly as formed in this way is connected to the body-in-white (40) solely via the cant rail (16, 18, 20) .

2. An assembly according to the preceding claim, wherein the longitudinal cant rail (16, 18, 20) includes an inclined plane (41) forming a connection surface for the cant rail (16, 18, 20) and the cross-member (22, 24, 26), which plane is designed to co-operate with a connection surface (45b) of complementary shape of the cross-member (22, 24, 26).

3. An assembly according to either preceding claim, wherein the cant rail (16, 18, 20) and the cross-member (22, 24, 26) are suitable for being connected together by adhesive.

4. An assembly according to any preceding claim, wherein the cross-member (22, 24, 26) comprises a stiffening central portion (37) and two lateral portions (39), each suitable for being connected to a cant rail.

5. An assembly according to claims 2 and 3, wherein each lateral portion of the cross-member (22, 24, 26) is horn-shaped (38) and includes an end wall (45b) constituting the connection surface that is suitable for co-operating with the inclined plane (41) of the cant rail.

6. An assembly according to any preceding claim, wherein the cross-member (26) is made integrally with at least a portion of the skin (12, 14) of the raised roof (10).

7. An assembly according to the preceding claim, wherein a flank (36) of the cross-member (26) is made integrally with a first portion (14) of the skin, said flank being suitable for being covered by a second portion (12) of the skin.

8. An assembly according to any preceding claim, wherein the cant rail (16, 18, 20) of the assembly includes at least one zone (32) presenting a shape of dimensions smaller than the dimensions of another shape of the cant rail in a zone (30) for connection with the cross-member (22, 24, 26).

9. A cross-member (22, 24, 26) of an assembly according to any preceding claim.

10. A longitudinal cant rail (16, 18, 20) of the assembly according to any one of claims 1 to 8.

11. A raised roof (10) including the assembly according to any one of claims 1 to 8.

## Patentansprüche

1. Anordnung aus einem Längsträger (16, 18, 20) und einem Querträger (22, 24, 26) eines Dachaufsatzes (10), wobei der Dachaufsatz (10) dazu ausgelegt ist, auf einem Rohfahrzeugaufbau (40) aufzuliegen, wobei die Anordnung **dadurch gekennzeichnet ist, dass** der Längsträger (16, 18, 20) und der Querträger (22, 24, 26) ausgebildet sind, um miteinander durch eine flächige Verbindung verbunden zu werden und so, dass die derart gebildete Anordnung mit dem Rohfahrzeugaufbau (40) nur über den Längsträger (16, 18, 20) verbunden ist.

2. Anordnung nach dem vorhergehenden Anspruch, bei der der Längsträger (16, 18, 20) eine schiefe Ebene (41) aufweist, die eine Fläche zum Verbinden des Längsträgers (16, 18, 20) und des Querträgers (22, 24, 26) bildet, die dazu bestimmt ist, mit einer Verbindungsfläche (45b) mit komplementärer Form des Querträgers (22, 24, 26) zusammenzuwirken.

3. Anordnung nach einem der vorhergehenden Ansprüche, bei der der Längsträger (16, 18, 20) und der Querträger (22, 24, 26) dazu ausgelegt sind, durch Kleben verbunden zu werden.

4. Anordnung nach einem der vorhergehenden Ansprüche, bei der der Querträger (22, 24, 26) einen zentralen Teil (37) zum Versteifen und zwei seitliche Teile (39) aufweist, die jeweils dazu ausgelegt sind, mit einem Längsträger verbunden zu werden.

5. Anordnung nach den Ansprüchen 2 und 3, bei der jeder seitliche Teil des Querträgers (22, 24, 26) als Horn (38) ausgebildet ist und einen Boden (45b) aufweist, der die Verbindungsfläche bildet, die dazu ausgelegt sind, mit der schiefen Ebene (41) des Längsträgers zusammenzuwirken.

6. Anordnung nach einem der vorhergehenden Ansprüche, bei der der Querträger (26) aus einem Stück mit mindestens einem Teil der Verkleidung (12, 14) des Aufsatzes (10) besteht.

7. Anordnung nach dem vorhergehenden Anspruch, bei der eine Flanke (36) des Querträgers (26) aus einem Stück mit einem ersten Teil (14) der Verkleidung besteht, wobei diese Flanke dazu ausgelegt ist, mit einem zweiten Teil (12) der Verkleidung abgedeckt zu werden.

8. Anordnung nach einem der vorhergehenden Ansprüche, bei der der Längsträger (16, 18, 20) der Anordnung mindestens eine Zone (32) aufweist, die eine Form mit kleineren Maßen als die einer anderen Form des Längsträgers in einer Verbindungszone (30) mit dem Querträger (22, 24, 26) aufweist.

9. Querträger (22, 24, 26) der Anordnung nach einem der vorhergehenden Ansprüche.

10. Längsträger (16, 18, 20) der Anordnung nach einem der Ansprüche 1 bis 8.

11. Dachaufsatz (10), der eine Anordnung nach einem der Ansprüche 1 bis 8 aufweist.
